# EUROPÄISCHE PATENTSCHRIFT

(11) **EP 1 878 627 B1**
(45) Veröffentlichungstag und Bekanntmachung des Hinweises auf die Patenterteilung: **01.10.2008**
(21) Anmeldenummer: 06014374.0
(22) Anmeldetag: 11.07.2006
(51) Int. Cl.: B60R 25/00, G07C 9/00

(54) **Ortungssystem**
Locatingsystem
Système de localisation

(43) Veröffentlichungstag der Anmeldung: 16.01.2008
(73) Patentinhaber: Delphi Technologies, Inc., Troy, Michigan 48007 (US)
(72) Erfinder: Ioffe, Alexander, Dr., 53229 Bonn (DE); Hildebrand, Carsten, 42115 Wuppertal (DE)
(74) Vertreter: Denton, Michael John

(56) Entgegenhaltungen:
- DE-A1- 10 046 571
- DE-A1- 10 310 155
- US-A- 4 673 921
- US-A1- 2002 067 249
- US-A1- 2005 128 140

## Beschreibung

Die Erfindung begrifft ein System zur Ortung eines mobilen Gegenstandes wie insbesondere eines Fahrzeugs der im Oberbegriff des Anspruchs 1 angegebenen Ait. Bei dem Fahrzeug kann es sich beispielsweise um ein Kraftfahrzeug, Schiff oder Fahrrad handeln. Ein solches Orfungssystem ist aus der DE 100 46 571 A1 Gekannt.

Fernbedienungs- oder Zugangskontrollsysteme für Fahrzeuge mit einer zugangsseitigen Steuereinrichtung, einer benutzerseitigen Identifikationseinrichtung und beispielsweise einem der Steuereinrichtung zugeordneten Transceiver oder getrennten Sende- und Empfangseinrichtungen für eine bidirektionale drahtlose Kommunikation mit der Identifikationseinrichtung sind bekannt. Ein solches Zugangskontrollsystem kommt in der Regel dort zum Einsatz, wo es um die Überprüfung geht, ob eine jeweilige Person oder Inhaber einer jeweiligen Identifikationseinrichtung autorisiert ist, die betreffende Zugangskontrolleinrichtung zu passieren. Mit den betreffenden Zugangskontrolleinrichtungen soll hier insbesondere einem Diebstahl des Fahrzeugs entgegengewirkt werden.

Ein jeweiliges Zugangskontrollsystem kann insbesondere als so genanntes schlüsselloses Zugangssystem und/oder schlüsselloses Startsystem (RKE = Remote Keyless Entry) für Fahrzeuge vorgesehen sein. Es umfasst in diesem Fall ein dem Fahrzeug zugeordnetes elektronisches Steuergerät und die tragbaren Identifikationseinrichtungen, die einen jeweiligen autorisierten Benutzer identifizieren sollen. Dabei kann eine jeweilige Identifikationseinrichtung selbst Teil eines Fahrzeugschlüssels oder Schlüsselanhängers sein, der mit der Steuereinrichtung im Bereich der Schließ-und/oder Startanlage des Fahrzeugs in bidirektionalem Datenaustausch steht. Die jeweiligen Identifikationseinrichtungen können insbesondere auch in Chipkarten oder dergleichen integriert und beispielsweise als Transponder ausgeführt sein. Solche Transponder weisen keine eigene Energieversorgung auf, sie werden vielmehr bei einer Annäherung der Identifikationseinrichtung an die Steuereinrichtung drahtlos mit Energie versorgt und im Weiteren automatisch zur Übertragung der Authentisierungsantwortsignale angesprochen. Die bisher bei diesen bekannten Fernbedienungs- oder Zugangskontrollsystemen eingesetzten HF-Antennen besitzen eine festgelegte Empfangs- und Sendecharakteristik, die zudem in den verschiedenen Richtungen um das Fahrzeug deutlich unterschiedliche Reichweiten mit sich bringt.

Der Erfindung liegt die Aufgabe zugrunde, ein möglichst effektives und zuverlässiges Ordnungssystem der eingangs genannten Art zu schaffen. Dabei soll soweit wie möglich auf die bisher bekannten Fernbedienungs-oder Zugangskontrollsysteme zurückgegriffen werden.

Erfindungsgemäß wird diese Aufgabe gelöst durch die Kennzeichnenden Merkmale des Anspruchs 1. Bei dem aus der DE 100 46 571 A1 bekannten Ortungssystem ist die Empfangs- und Sendecharakteristik der Antennenanordnung nicht variabel einstellbar. Sowohl das Fahrzeug als auch die benutzerseitige Identifikationseinrichtung besitzen jeweils eine mit einem GPS-Satelliten kommunizierende GPS-Ortungseinrichtung. Dasselbe trifft auch auf ein aus der US 2005/0128140 bekanntes Ortungssystem zu.

Bei einem aus der US 4 673 921 bekannten Fahrzeug-Ortungssystem ist die fahrzeugseitige Steuereinheit mit einer ungerichteten Antenne und die Identifikationseinrichtung mit einer Richtantenne versehen. Zur Lokalisierung des Fahrzeugs muss der Benutzer die Richtantenne in der Horizontalebene drehen, während er den auf einer Anzeige der Identifikationseinrichtung wiedergegebenen sich ändernden Pegel beobachtet. Der Benutzer liest dann den Winkel ab, über den die Richtantenne gedreht wurde, sobald der angezeigte Pegel einen Maximalwert erreicht. Die fahrzeugseitige Steuereinheit besitzt also auch in diesem Fall keine einstellbare Antennenanordnung.

Bei einem aus der US 2002/0067249 bekannten schlüssellosen Zugangskontrollsystem schätzt der fahrzeugseitige Empfänger die Entfernung anhand der Stärke des von der Identifikationseinrichtung empfangenen Signals. Die Identifikationseinrichtung muss über einen Winkelbereich bewegt werden, um die Näherungsrichtung des Fahrzeugs identifizieren zu können. Wird die Identifikationsvorrichtung über den Winkelbereich bewegt, so empfängt ein Empfänger der Identifikationseinrichtung ein Signal vom Fahrzeug. Das von der Identifikationseinrichtung empfangene Signal variiert in seiner Stärke, wenn der Empfänger der Identifikationseinrichtung vom Fahrzeug wegzeigt und direkt auf dieses gerichtet wird. Nach einem ersten vollständigen Überstreichen des Bereiches wird die Identifikationseinrichtung in umgekehrter Richtung über denselben Bereich bewegt. Zuvor hat die Steuereinrichtung den Näherungsspitzenwert, der von der Identifikationseinrichtung vom Fahrzeug empfangen wurde, gespeichert. Bei dem zweiten Überstreichen des Bereichs in entgegengesetzter Richtung wird dann, wenn dasselbe Spitzensignal erreicht wird, ein Signal in der Identifikationseinrichtung erzeugt, das es dem Benutzer erlaubt, die Näherungsrichtung des Fahrzeugs zu identifizieren. Alternativ kann das Fahrzeug dann, wenn sich die Identifikationseinrichtung und das Fahrzeug im Ortungsmodus befinden, die Stärke des Signals senden, wenn die Identifikationseinrichtung sich über den Bereich bewegt. Das Fahrzeug kann dann einen Spitzenwert identifizieren, und wenn dieser Spitzenwert wieder erfasst wird, ein Richtungssignal zu der Identifikationseinrichtung senden. Auf den Empfang dieses Signals hin kann die Identifikationseinrichtung die Ortungseinrichtung aktivieren. Die Signalisierung kann über Licht, Schall, Vibrationen usw. erfolgen. Auch bei diesem bekannten System ist somit fahrzeugseitig keine einstellbare Antennenanordnung vorgesehen.

Bei einem aus der DE 103 10 155 A1 bekannten Zugangskontrollsystem werden HF-Signale mit ansteigenden und abfallenden Frequenzrampen zur Messung der Entfernung zwischen dem Fahrzeug und der Identifikationseinrichtung verwendet. Die betreffenden Signale werden von der fahrzeugseitigen Steuereinheit ausgesandt und von der Identifikationseinrichtung zurückgesandt. Aufgrund der Verzögerung des von der Steuereinheit empfangenen Signals tritt eine entsprechende Frequenz- oder Phasendifferenz auf, anhand der die Entfernung zwischen dem Fahrzeug und der Identifikationseinrichtung berechnet wird. Auch dieses bekannte System besitzt keine fahrzeugseitige einstellbare Antennenanordnung.

Bei der Antennenanordnung kann es sich insbesondere um eine HF-Antennenanordnung handeln.

Durch die erfindungsgemäße Weiterbildung der bisher bekannten Fernbedienungs- oder Zugangskontrollsysteme wird erfindungsgemäß nunmehr ein auf einem solchen weitergebildeten Fernbedienungssystem basierendes Ortungssystem geschaffen. Dies wird insbesondere dadurch erreicht, dass die Empfangs- und/oder Sendecharakteristik der Antennenanordnung nunmehr so einstellbar ist, dass sich anders als bei den bisher bekannten Fernbedienungssystemen ein Überwachungsbereich um den mobilen Gegenstand, d.h. beispielsweise das Fahrzeug ergibt, der sich in der Horizontalebene betrachtet über einen Fächerwinkel von zumindest im Wesentlichen 360° erstreckt. Erst dadurch sind die Voraussetzungen für eine Erfassung des jeweiligen Abstandes bzw. einer jeweiligen Abstandsänderung geschaffen. Erfindungsgemäß sind die Mittel zur Erfassung des jeweiligen Abstands zwischen der Identifikationseinrichtung und dem mobilen Gegenstand und/oder zur Erfassung einer Änderung dieses Abstands vorgesehen. Die Identifikationseinrichtung umfasst Signalisierungs- und/oder Anzeigemittel, um zumindest den jeweiligen Abstand zwischen der Identifikationseinrichtung und dem mobilen Gegenstand und/oder die Änderung dieses Abstandes zu signalisieren bzw. anzuzeigen. Damit ist es beispielsweise möglich, einen Fahrzeugbesitzer innerhalb der Reichweite der bidirektionalen Kommunikationsstrecke des Fembedienungssystems zu seinem Fahrzeug zu führen.

Bevorzugt ist zumindest die Empfangscharakteristik der Antennenanordnung entsprechend einstellbar.

Die betreffende Empfangs- bzw. Sendecharakteristik der Antennenanordnung ist vorteilhafterweise über eine entsprechende Ansteuerung der Antennenanordnung und/oder eine entsprechende Auswertung der Empfangssignale durch die elektronische Steuereinrichtung einstellbar.

Die Mittel zur Erfassung des jeweiligen Abstandes bzw. zur Erfassung einer jeweiligen Änderung dieses Abstandes und/oder die Mittel zur Erfassung der jeweiligen Richtung sind zweckmäßigerweise der beispielsweise fahrzeugseitigen Steuereinrichtung zugeordnet, wobei die betreffenden Abstands- bzw. Richtungsinformationen über die bidirektionale Kommunikationsstrecke von dem mobilen Gegenstand an die Identifikationseinrichtung übermittelt werden.

Das System ist vortheilhafterweise für eine Reichweite zwishen etwa 0 m und etwa 700 m, insbesondere zwischen etwa 0 m und etwa 600 m und vorzugsweise zwischen 0 m und etwa 500 m ausgelegt.

Gemäß einer weiteren vorteilhaften Ausführungsform erfolgt die Richtungserfassung zumindest teilweise auf der Basis der Phasendifferenz zwischen den Empfangssignalen unterschiedlicher Elemente der Antennenanordnung. Eine solche Variante bietet sich insbesondere bei der Verwendung einer so genannten "Phased Array"-Antenne oder Gruppenantenne an.

Bevorzugt ist dem mobilen Gegenstand und/oder der Identifikationseinrichtung jeweils ein Kompass zugeordnet. Damit ist es beispielsweise möglich, dass durch die Steuereinrichtung die Azimutposition des mobilen Gegenstandes relativ zu der Identifikationseinrichtung abgeschätzt wird. Diese Information kann dann über die bidirektionale Kommunikationsstrecke an die Identifikationseinrichtung übermittelt werden, die dann die Richtung des mobilen Gegenstandes unter Verwendung der Informationen vom eigenen Kompass entsprechend signalisieren bzw. anzeigen kann. Dieser Vorgang kann wiederholt werden, bis der Benutzer den mobilen Gegenstand bzw. sein Fahrzeug aufgefunden hat.

Bei einer vereinfachten kostengünstigen Ausführungsform ist die Empfangs- und/oder Sendecharakteristik der Antennenanordnung so einstellbar, dass sie anders als beim Verschwenken eines Richtstrahls den sich zumindest im Wesentlichen über 360° erstreckenden Überwachungsbereich stets insgesamt umfasst, wobei lediglich der jeweilige Abstand bzw. die jeweilige Abstandsänderung erfasst wird.

Von Vorteil ist insbesondere auch, wenn das System zwischen einem der Erfassung des Abstands bzw. der Abstandsänderung und gegebenenfalls der Richtung dienenden Modus und einem der Fernbedienung dienenden normalen Modus umschaltbar ist. Bevorzugt ist hierbei auf den Empfang eines von der Identifikationseinrichtung stammenden Umschaltsignals hin der Empfangsmodus des mobilen Gegenstands bzw. dessen Empfangscharakteristik entsprechend umschaltbar. Vorteilhafterweise erfolgt die Erfassung des Abstands bzw. der Abstandsänderung und gegebenenfalls der Richtung durch die Steuereinrichtung auf der Basis der nach dem Umschalten empfangenen Signale von der Identifikationseinrichtung.

Die Identifikationseinrichtung kann insbesondere in einem Schlüsselanhänger oder dergleichen integriert sein. Wie bereits erwähnt, kann eine solche Identifikationseinrichtung jedoch auch Teil des Fahrzeugschlüssels oder in einer Chipkarte oder dergleichen integriert sein.

Bei dem mobilen Gegenstand kann es sich, wie bereits erwähnt, insbesondere um ein Fahrzeug, beispielsweise ein Kraftfahrzeug, Schiff, Fahrrad oder dergleichen handeln.

Das verwendete Fernbedienungs- oder Zugangskontrollsystem kann nach wie vor auch die bisher üblichen Fernbedienungs- bzw. Zugangskontrollfunktionen erfüllen. Für die erfindungsgemäße Ortungsfunktion kann dann beispielsweise von diesem den normalen Betrieb betreffenden Modus auf den Ortungsmodus umgeschaltet werden. Soweit hier von einem so genannten "Richtstrahl" die Rede ist, kann dieser beispielsweise sowohl durch eine entsprechende Bündelung der Strahlung als auch durch eine entsprechende Berechnung in der Steuereinrichtung erzeugt werden, so dass zumindest im letzteren Fall ein "gedachter" Richtstrahl gemeint ist. Mit dem Begriff "Fernbedienungssystem" seien hier allgemein auch Zugangskontrollsysteme mit umfasst.

Das zugrunde liegende Fernbedienungssystem kann nach wie vor auch die bisher üblichen Sicherheitsvorschriften erfüllen. So kann es beispielsweise nach wie vor so ausgeführt sein, dass außerhalb eines vorgegebenen Nahbereichs kein Zugang mehr möglich ist.

Insbesondere die Richtungserfassung kann auf dem Doppler-Effekt beruhen.

Weitere Merkmale und Vorteile der Erfindung ergeben sich aus den folgenden Ausführungsbeispielen.

Erfindungsgemäß wurden die bisher existierenden HF-Antennen für schlüssellose Kraftfahrzeug-Fernbedienungs- oder Zugangskontrollsysteme für eine zusätzliche Ortungsfunktion weiterentwickelt.

Das erfindungsgemäße Ortungssystem basiert auf einem schlüssellosen Fernbedienungs- oder Zugangskontrollsystem (RKE = Remote Keyless Entry) mit einer beispielsweise in einem Schlüsselanhänger integrierten Identifikationseinrichtung und einem im Fahrzeug vorgesehenen Transceiver, zwischen denen eine bidirektionale Kommunikation stattfindet. Das Fahrzeugortungssystem führt den Fahrzeugbesitzer innerhalb der Reichweite des bidirektionalen Fernbedienungssystems zu dem Fahrzeug. Zur Verwirklichung eines zuverlässigen Ortungssystems wurde die Empfangscharakteristik entsprechend angepasst und verbessert sowie eine weitere Funktion verwirklicht, die es insbesondere ermöglicht, eine so genannte Richtungsstrahl-Charakteristik der dem Fahrzeug zugeordneten HF-Antenne zu erzeugen. Diese spezielle Richtantenne sollte alle für das Fahrzeug-Ortungssystem erforderlichen Eigenschaften besitzen. So kann beispielsweise die Reichweite im Vergleich zu den bisher vorgesehenen, z.B. auf gedruckten Schaltungen (PCB = Printed Circuit Board) integrierten Antennen entsprechend erweitert sein. Mit der richtungsselektiven Charakteristik ist eine genauere Bestimmung der Richtung der Identifikationseinrichtung in Bezug auf das Fahrzeug möglich. Zumindest sollte ein zumindest im Wesentlichen kreisförmiges Feld um das Fahrzeug erzeugt werden. Bei den bisher eingesetzten Antennen fehlt es an einer kreisförmigen Empfangscharakteristik, so dass mit diesen eine Ortungsfunktion noch nicht möglich ist. So können mit diesen bisher üblichen Antennen weder der Abstand zwischen dem Besitzer und dem Fahrzeug noch die Richtung der Identifikationseinrichtung in Bezug auf das Fahrzeug festgestellt werden.

Für die bisherige Fernbedienungsfunktion (RKE = Remote Key Entry) besaßen die herkömmlichen HF-Antennen eine nicht kreisförmige Charakteristik mit einer stark unterschiedlichen Kommunikationsreichweite rund um das Fahrzeug, was bedeutet, dass die garantierte Kommunikationsreichweite stark eingeschränkt ist.

Erfindungsgemäß wird nun beispielsweise ein flexibles HF-Antennensystem anstelle der bisher üblichen festgelegten Antenne auf der gedruckten Schaltung verwendet. Eine Möglichkeit besteht darin, ein Antennen-Array mit verschiedenen Eingängen einzusetzen und unter Verwendung unterschiedlicher Phasen der Eingänge unterschiedliche Strahlungsmuster zu erzeugen. Eine andere Möglichkeit besteht darin, die Elemente eines solchen Antennen-Arrays aufeinander folgend anzusteuern. Ein solches System besitzt zwei Zielrichtungen. Indem unterschiedliche Antennencharakteristika verwendet werden, kann das integrierte Strahlungsmuster zumindest im Wesentlichen kreisförmig gestaltet werden, wodurch die garantierte Reichweite der Fernbedienungs-(RKE)-Kommunikation erhöht wird. Andererseits erhält man durch eine Kombination der Informationen von der Identifikationseinrichtung, die über die verschiedenen tatsächlichen oder gedachten so genannten "Richtstrahlen" der Antenne empfangen wurden, die Information bezüglich des Abstandes zu der Identifikationseinrichtung, wobei überdies zumindest annäherungsweise der Richtungswinkel abgeschätzt werden kann. Unter "Richtungsstrahlen" seien hier beispielsweise sich deutlich voneinander unterscheidende Antennenstrahlungsmuster zu verstehen, die bevorzugt in eine oder wenige Azimut-Richtungen weisen. Eine weitere Möglichkeit besteht darin, die Richtungsunterscheidung durch Berechnung auf der Basis der Phasendifferenz zwischen den von verschiedenen Elementen des Antennensystems empfangenen Signalen der Identifikationseinrichtung zu verwirklichen.

Mit einer solchen Antennenanordnung kann das Fahrzeug-Ortungssystem die Richtung der Identifikationseinrichtung in Bezug auf die Position des Fahrzeugs erfassen. Infolge des verbesserten Azimutstrahlungsmusters kann auch der Abstand der Identifikationseinrichtung zum Fahrzeug bestimmt werden.

Mit diesen beiden Eigenschaften der Empfangsantenne kann ein Fahrzeug-Ortungssystem, d.h. ein System zum Auffinden des Fahrzeugs verwirklicht werden.

Im ersten Fall ist als einzige zusätzliche Komponente in der Identifikationseinrichtung und den mobilen Gegenstand bzw. Fahrzeug jeweils ein Kompass vorgesehen. Dabei kann über die Identifikationseinrichtung eine betreffende Funktion auf der Seite des Fahrzeugs ausgelöst werden, indem beispielsweise eine spezielle Such-RKE-Anfrage für das Fahrzeug gesendet wird, das die Fahrzeugempfangseinheit veranlasst, von einem normalen Empfangsmodus für die Fernbedienungs- oder Zugangskontrollfunktion in einen so genannten "Richtstrahl"-Modus umzuschalten, in dem die Richtung der darauf folgenden, von der zu suchenden Identifikationseinrichtung ausgesandten Signale analysiert wird.

In Verbindung mit den Informationen vom Kompass in dem Fahrzeug kann das Fahrzeugsystem die Welt-Azimutposition des Fahrzeugs in Bezug auf die Identifikationseinrichtung abschätzen. Die betreffende Information wird dann an die Identifikationseinrichtung übermittelt, die die Richtung zum Fahrzeug unter Verwendung der Informationen vom eigenen Kompass beispielsweise anzeigen kann. Dieser Vorgang kann sich wiederholen, bis der Besitzer sein Fahrzeug aufgefunden hat. Die Richtung kann beispielsweise unter Verwendung eines beleuchteten Kompasssymbols oder über ein komfortableres Display auf einfache Weise angezeigt werden.

Es ist beispielsweise auch die folgende einfache, kostengünstige Ausführung denkbar, bei der auf einen zusätzlichen Suchmodus des Fahrzeugsystems und den jeweiligen Kompass auf der Seite des Fahrzeugs und der Identifikationseinrichtung verzichtet werden kann. Bei dieser Ausführungsform ist es nicht erforderlich, dass die Fahrzeugantenne verschiedene "Richtstrahlen" bereitstellt. Das "Richtstrahl"-Merkmal ist darauf reduziert, einen mehr oder weniger kreisförmigen Bereich durch das Antennensystem abzudecken. In diesem Fall wird durch das Fahrzeugsystem nur der Abstand zu der Identifikationseinrichtung bestimmt. Dazu kann beispielsweise der RSSI-Wert bzw. die Stärke des empfangenen Signals von der Identifikationseinrichtung gemessen werden (RSSI = Received Signal Strength Indicator). Eine weitere Möglichkeit besteht darin, die HF-Trägerfrequenz des Fahrzeugsignals auf der Basis einer Amplitudenmodulation mit einem NF-Signal, z.B. 125 kHz, zu modulieren und den Abstand auf der Basis der Phase der eingehenden Signalamplitudenmodulation im Vergleich zu der gleichzeitig ausgelösten NF-Schwingung in der Identifikationseinrichtung abzuschätzen. In jedem Fall können die RSSI-Messung und die Wegmessung miteinander kombiniert werden.

Bei diesem einfachen, kostengünstigen Ausführungsbeispiel erhält der Benutzer Informationen darüber, ob, wenn er sich selbst bewegt, der Abstand zum Fahrzeug zu- oder abnimmt. Dazu kann beispielsweise eine LED-Anzeige vorgesehen sein, wobei beispielsweise in Abhängigkeit von dem Abstand ein Farbwechsel z.B. von Rot auf Grün, erzeugt werden kann. Es ist jedoch beispielsweise auch eine akustische Signalisierung denkbar. Dabei kann beispielsweise die Lautstärke in Abhängigkeit vom Abstand variiert werden. Es können beispielsweise auch Mittel zur Erzeugung von Klopfsignalen (sounder) vorgesehen sein, wobei in diesem Fall beispielsweise die Wiederholungsfrequenz der Klopfsignale in Abhängigkeit von dem Abstand variiert werden können.

Im Fall eines schlüssellosen Fernbedienungs- oder Zugangskontrollsystems auf der Basis von NF-Schleifenantennen der Technologie flexibler gedruckter Schaltungen (FPC = Flexible Printing Circuit) kann die Richtantenne beispielsweise auf der gleichen flexiblen gedruckten Schaltung verwirklicht werden, um die Kosten zu reduzieren.

## Patentansprüche

1. System zur Ortung eines mobilen Gegenstandes wie insbesondere eines Fahrzeuges auf der Basis eines Fernbedienungssystems mit einer dem mobilen Gegenstand zugeordneten Steuereinrichtung, einer benutzerseitigen Identifikationseinrichtung beispielsweise mit zugeordnetem Transceiver oder getrennten Sende- und Empfangseinrichtungen, einer dem mobilen Gegenstand zugeordneten Transceiver oder getrennten Sende- und Empfangseinrichtungen und wenigstens einer dem mobilen Gegenstand zugeordneten Antennenanordnung für eine bidirektionale drahtlose Kommunikation mit der Identifikationseinrichtung, wobei Mittel zur Erfassung des jeweiligen Abstandes zwischen der Identifikationseinrichtung und dem mobilen Gegenstand und/oder zur Erfassung einer Änderung dieses Abstandes vorgesehen sind und die Identifikationseinrichtung Signalisierungs- und/oder Anzeigemittel umfasst, um zumindest den jeweiligen Abstand zwischen der Identifikationseinrichtung und dem mobilen Gegenstand und/oder die Änderung dieses Abstandes zu signalisieren bzw. anzuzeigen, und wobei zudem Mittel zur Erfassung der jeweiligen Richtung der Identifikationseinrichtung in Bezug auf den mobilen Gegenstand vorgesehen sind und über die der Identifikationseinrichtung zugeordneten Signalisierungs- bzw. Anzeigemittel zudem die jeweilige Richtung signalisierbar bzw. anzeigbar ist,
**dadurch gekennzeichnet, dass** die Empfangs- und/oder Sendecharakteristik der Antennenanordnung so einstellbar ist, dass sich ein Überwachungsbereich um diesen mobilen Gegenstand ergibt, der sich in der Horizontalebene betrachtet über einen Fächerwinkel von zumindest im Wesentlichen 360° erstreckt, wobei die Empfangs- bzw. Sendecharakteristik der Antennenanordnung so einstell- und variierbar ist, dass nach Art einer Richtantenne eine richtungsselektive Charakteristik erzeugt wird, deren Richtstrahl über den Bereich von zumindest im Wesentlichen 360° verschwenkt wird, und die Erfassung des Abstandes bzw. der Abstandsänderung bzw. die Richtungserfassung zumindest teilweise auf der Basis von Informationen erfolgt, die von der Identifikationseinrichtung stammen und vom mobilen Gegenstand über wenigstens zwei unterschiedliche Richtstrahlen der richtungsselektiven Charakteristik der HF-Antennenanordnung empfangen wurden.

2. System nach Anspruch 1,
**dadurch gekennzeichnet,**
**dass** zumindest die Empfangscharakteristik der Antennenanordnung entsprechend einstellbar ist.

3. System nach Anspruch 1 oder 2,
**dadurch gekennzeichnet,**
**dass** die betreffende Empfangs- bzw. Sendecharakteristik der Antennenanordnung über eine entsprechende Ansteuerung der Antennenanordnung und/oder eine entsprechende Auswertung der Empfangssignale durch die Steuereinrichtung einstellbar ist.

4. System nach einem der vorhergehendenAnsprüche,
**dadurch gekennzeichnet,**
**dass** die Mittel zur Erfassung des jeweiligen Abstandes bzw. zur Erfassung einer jeweiligen Änderung dieses Abstandes und/oder die Mittel zur Erfassung der jeweiligen Richtung der Steuereinrichtung zugeordnet sind und die betreffenden Abstands- bzw. Richtungsinformationen über die bidirektionale Kommunikationsstrecke an die Identifikationseinrichtung übermittelt werden.

5. System nach zumindest einem der vorangehenden Ansprüche,
**dadurch gekennzeichnet,**
**dass** es für eine Reichweite zwischen etwa 0 m und etwa 700 m, insbesondere zwischen etwa 0 m und etwa 600 m und vorzugsweise zwischen 0 m und etwa 500 m ausgelegt ist.

6. System nach einem der vorhergehenden Ansprüche,
**dadurch gekennzeichnet,**
**dass** die Richtungserfassung zumindest teilweise auf der Basis der Phasendifferenz zwischen den Empfangssignalen unterschiedlicher Elemente der Antennenanordnung erfolgt.

7. System nach einem der vorhergehenden Ansprüche,
**dadurch gekennzeichnet,**
**dass** dem mobilen Gegenstand und/oder der Identifikationseinrichtung jeweils ein Kompass zugeordnet ist.

8. System nach einem der vorhergehenden Ansprüche,
**dadurch gekennzeichnet,**
**dass** die Empfangs- und/oder Sendecharakteristik der HF-Antennenanordnung so einstellbar ist, dass sie anders als beim Verschwenken eines Richtstrahls den sich zumindest im Wesentlichen über 360° erstreckenden Überwachungsbereich stets insgesamt umfasst, und dass lediglich der jeweilige Abstand bzw. die jeweilige Abstandsänderung erfasst wird.

9. System nach einem der vorhergehenden Ansprüche,
**dadurch gekennzeichnet,**
**dass** es zwischen einem der Erfassung des Abstandes bzw. der Abstandsänderung und gegebenenfalls der Richtung dienenden Modus und einem der Fernbedienung dienenden normalen Modus umschaltbar ist.

10. System nach Anspruch 9,
**dadurch gekennzeichnet,**
**dass** auf den Empfang eines von der Identifikationseinrichtung stammenden Umschaltsignals hin der Empfangsmodus des mobilen Gegenstandes bzw. dessen Empfangscharakteristik entsprechend umschaltbar ist.

11. System nach Anspruch 8 oder 9,
**dadurch gekennzeichnet,**
**dass** die Erfassung des Abstandes bzw. der Abstandsänderung und gegebenenfalls der Richtung durch die Steuereinrichtung auf der Basis der nach dem Umschalten empfangenen Signale von der Identifikationseinrichtung erfolgt.

12. System nach einem der vorhergehenden Ansprüche,
**dadurch gekennzeichnet,**
**dass** die Identifikationseinrichtung in einem Schlüsselanhänger integriert ist.

13. System nach einem der vorhergehenden Ansprüche,
**dadurch gekennzeichnet,**
**dass** die Antennenanordnung durch eine HF-Antennenanordnung gebildet ist.

## Claims

1. System for locating a mobile object, such as in particular a vehicle, on the basis of a remote operating system having a control device assigned to the mobile object, a user-side identification device, for example with assigned transceiver or separate transmitting and receiving devices, a transceiver assigned to the mobile object or separate transmitting and receiving devices and at least one antenna arrangement assigned to the mobile object for bidirectional wireless communication with the identification device, wherein means are provided for recording the particular distance between the identification device and the mobile object and/or for recording a change in this distance and the identification device comprises signalling and/or display means to signal or to display at least the particular distance between the identification device and the mobile object and/or the change in this distance, and wherein additionally means are provided for recording the particular direction of the identification device with reference to the mobile object and additionally the particular direction can be signalled or displayed via the signalling or display means assigned to the identification device, **characterised in that** the receiving and/or transmitting characteristic of the antenna arrangement can be adjusted so that a monitoring region is produced around this mobile object, which extends in the horizontal plane, observed over a fan angle of at least essentially 360°, wherein the receiving or transmitting characteristic of the antenna arrangement can be adjusted and varied so that according to the type of directional antenna, a direction-selective characteristic is produced, the directional beam of which is pivoted over the region of at least essentially 360°, and recording of the distance or the distance change or direction recording takes place at least partly on the basis of information which originates from the identification device and has been received from the mobile object via at least two different directional beams of the direction-selective characteristic of the HF antenna arrangement.

2. System according to claim 1, **characterised in that** at least the receiving characteristic of the antenna arrangement can be adjusted accordingly.

3. System according to claim 1 or 2, **characterised in that** the relevant receiving or transmitting characteristic of the antenna arrangement can be adjusted by the control device via corresponding control of the antenna arrangement and/or corresponding evaluation of the receiving signals.

4. System according to one of the preceding claims, **characterised in that** the means for recording the particular distance or for recording a particular change in this distance and/or the means for recording the particular direction are assigned to the control device and the relevant distance or direction information is transmitted to the identification device via the bidirectional communication path.

5. System according to at least one of the preceding claims, **characterised in that** it is designed for a range between about 0 m and about 700 m, in particular between about 0 m and about 600 m and preferably between 0 m and about 500 m.

6. System according to one of the preceding claims, **characterised in that** direction recording takes place at least partly on the basis of the phase difference between the receiving signals of different elements of the antenna arrangement.

7. System according to one of the preceding claims, **characterised in that** in each case a compass is assigned to the mobile object and/or the identification device.

8. System according to one of the preceding claims, **characterised in that** the receiving and/or transmitting characteristic of the HF antenna arrangement can be adjusted so that, unlike when pivoting a directional beam, it always includes by and large the monitoring range extending at least essentially over 360°, and **in that** only the particular distance or the particular distance change is recorded.

9. System according to one of the preceding claims, **characterised in that** it can be switched between a mode serving to record the distance or the distance change and optionally the direction and a normal mode serving for remote operation.

10. System according to claim 9, **characterised in that** on receiving a switching signal originating from the identification device, the receiving mode of the mobile object or its receiving characteristic can be switched accordingly.

11. System according to claim 8 or 9, **characterised in that** recording of the distance or the distance change and optionally the direction is effected by the control device on the basis of the signals from the identification device received after switching.

12. System according to one of the preceding claims, **characterised in that** the identification device is integrated in a key fob.

13. System according to one of the preceding claims, **characterised in that** the antenna arrangement is formed by an HF antenna arrangement.

## Revendications

1. Système de localisation d'un objet mobile comme en particulier d'un véhicule sur la base d'un système de télécommande, comportant un dispositif de commande associé à un objet mobile, un dispositif d'identification côté utilisateur par exemple avec un récepteur-émetteur associé ou des dispositifs séparés d'émission et de réception, un récepteur-émetteur associé à l'objet mobile et des dispositifs séparés d'émission et de réception, et au moins un agencement d'antennes associé à l'objet mobile pour une communication sans fil bidirectionnelle avec le dispositif d'identification, dans lequel sont prévus des moyens pour détecter la distance respective entre le dispositif d'identification et l'objet mobile et/ou pour détecter une modification de cette distance, et le dispositif d'identification comprend des moyens de signalisation et/ou d'affichage pour signaliser ou afficher au moins la distance respective entre le dispositif d'identification et l'objet mobile et/ou la modification de cette distance, et dans lequel sont en outre prévus des moyens de détection de la direction respective du dispositif d'identification par rapport à l'objet mobile et la direction respective peut être signalisée et affichée via les moyens de signalisation et les moyens d'affichage associés au dispositif d'identification,
**caractérisé en ce que**
la caractéristique de réception et/ou d'émission de l'agencement d'antennes peut être réglée de telle sorte qu'il en résulte une zone de surveillance autour de cet objet mobile, laquelle, vue dans le plan horizontal, s'étend sur un angle en éventail d'au moins sensiblement 360°, la caractéristique de réception et/ou d'émission de l'agencement d'antenne pouvant être réglée ou varier de telle sorte qu'il est engendré, à la manière d'une antenne directionnelle, une caractéristique sélective vis-à-vis de la direction dont le faisceau directif est pivoté sur la plage d'au moins 360°, et la détection de la distance ou la modification de distance ou la détection de direction a lieu au moins partiellement sur la base d'informations qui proviennent du dispositif d'identification et qui ont été reçues par l'objet mobile via au moins deux différents faisceaux directifs de la caractéristique sélective vis-à-vis de la direction, de l'agencement d'antennes HF.

2. Système selon la revendication 1,
**caractérisé en ce que**
au moins la caractéristique de réception de l'agencement d'antennes peut être réglée de manière correspondante.

3. Système selon la revendication 1 ou 2,
**caractérisé en ce que**
la caractéristique de réception ou d'émission respective concernée de l'agencement d'antennes peut être réglée via un pilotage correspondant de l'agencement d'antennes et/ou d'une évaluation correspondante des signaux de réception par le dispositif de commande.

4. Système selon l'une quelconque des revendications précédentes,
**caractérisé en ce que**
les moyens de détection de la distance respective ou de détection d'une modification respective de cette distance, respectivement, et/ou les moyens de détection de la direction respective sont associés au dispositif de commande, et les informations de distance ou de direction concernées, respectivement, sont transmises au dispositif d'identification via le trajet de communication bidirectionnel.

5. Système selon au moins l'une quelconque des revendications précédentes,
**caractérisé en ce que**
il est conçu pour une portée entre approximativement 0 m et approximativement 700 m, en particulier entre approximativement 0 m et approximativement 600 m et de préférence entre 0 m et approximativement 500 m.

6. Système selon l'une quelconque des revendications précédentes,
**caractérisé en ce que** la détection de direction a lieu au moins partiellement sur la base de la différence de phase entre les signaux de réception de différents éléments de l'agencement d'antennes.

7. Système selon l'une quelconque des revendications précédentes,
**caractérisé en ce que**
à l'objet mobile et/ou au dispositif d'identification est associée une boussole respective.

8. Système selon l'une quelconque des revendications précédentes,
**caractérisé en ce que**
la caractéristique de réception et/ou d'émission de l'agencement d'antennes HF peut être réglée de telle sorte que de façon différente au pivotement d'un rayon directif, elle englobe toujours dans l'ensemble la zone de surveillance s'étendant au moins sensiblement sur 360°, et **en ce que** seulement la distance respective ou la modification de distance respective est détectée.

9. Système selon l'une quelconque des revendications précédentes,
**caractérisé en ce que**
il peut être commuté entre un mode servant à la détection de la distance ou de la modification de la distance et éventuellement de la direction, et un mode normal servant à la télécommande.

10. Système selon la revendication 9,
**caractérisé en ce que**
sur la réception d'un signal de commutation provenant du dispositif d'identification, le mode de réception de l'objet mobile ou de sa caractéristique de réception peut être commuté de manière correspondante.

11. Système selon la revendication 8 ou 9,
**caractérisé en ce que** la détection de la distance ou de la modification de la distance et éventuellement de la direction par le dispositif de commande a lieu sur la base des signaux reçus après la commutation, du dispositif d'identification.

12. Système selon l'une quelconque des revendications précédentes,
**caractérisé en ce que**
le dispositif d'identification est intégré dans un porte-clés.

13. Système selon l'une quelconque des revendications précédentes,
**caractérisé en ce que**
l'agencement d'antennes est formé par un agencement d'antenne HF.
